# FASCICULE DE BREVET EUROPEEN

(11) **EP 3 734 493 B1**
(45) Date de publication et mention de la délivrance du brevet: **07.06.2023**
(21) Numéro de dépôt: 20166518.9
(22) Date de dépôt: 27.03.2020
(51) Int. Cl.: G06K 7/00

(54) **ETUI D'ENRÔLEMENT POUR CARTE À PUCE**
AUFNAHMEETUI FÜR CHIPKARTE
CASE FOR ENROLMENT FOR SMART CARD

(30) Priorité: 03.05.2019 FR 1904662
(43) Date de publication de la demande: 04.11.2020
(73) Titulaire: Idemia Identity & Security France, 92400 Courbevoie (FR)
(72) Inventeur: PRAWITZ, Nicolas, 92400 COURBEVOIE (FR); BAUBAN, Patrick, 92400 COURBEVOIE (FR); FOURRE, Joël-Yann, 92400 COURBEVOIE (FR)
(74) Mandataire: Idemia

(56) Documents cités:
- EP-A1- 1 222 623
- EP-B1- 1 222 623
- US-A1- 2018 276 518
- CARUSO FRANCESCO ET AL: "High-throughput shadow mask printing of passive electrical components on paper by supersonic cluster beam deposition", APPLIED PHYSICS LETTERS, A I P PUBLISHING LLC, US, vol. 108, no. 16, 18 avril 2016 (2016-04-18), XP012207002, ISSN: 0003-6951, DOI: 10.1063/1.4947281 [extrait le 1901-01-01]
- CLAUDIA DAUDÉN ROQUET ET AL: "3D Folded PrintGami", DESIGNING INTERACTIVE SYSTEMS, ACM, 2 PENN PLAZA, SUITE 701 NEW YORK NY 10121-0701 USA, 4 juin 2016 (2016-06-04), pages 187-191, XP058259394, DOI: 10.1145/2901790.2901891 ISBN: 978-1-4503-4031-1

## Description

### Domaine technique

La présente invention concerne le domaine des étuis pour cartes à circuit(s) intégré(s), également connues sous l'appellation de cartes à puce.

### Technique antérieure

De nombreuses cartes à puce sont utilisées comme moyens d'accès sécurisé à des services, tels que des services de paiement ou de transport. Si traditionnellement l'authentification de l'utilisateur était réalisée au travers de la saisie d'un code personnel, généralement un code PIN (pour « Personal Identification Number » ou numéro d'identification personnel), un nombre croissant de cartes à puce, dites biométriques, intègre désormais un ou plusieurs capteurs biométriques permettant d'acquérir une donnée (ou échantillon) biométrique du porteur pour l'authentifier.

Il existe par exemple des cartes à puce de paiement dotées d'un capteur d'empreinte digitale. Au lieu d'indiquer son code secret, le porteur place son pouce sur le capteur une fois la carte insérée dans le terminal de paiement par contact ou lorsque la carte est approchée du terminal de paiement sans contact. Le porteur peut ainsi être authentifié.

Le porteur d'une carte biométrique doit généralement procéder à une opération initiale (et généralement unique) d'acquisition de ses propres données biométriques (ou étape d'« enrolment » ou enrôlement), typiquement une ou plusieurs empreintes digitales, comme données de référence auxquelles seront comparées par la suite des nouvelles données acquises par le capteur biométrique à des fins d'authentification.

La publication US 2018/276518 propose, notamment en ses figures 9, des étuis sources d'énergie électrique, utilisables pour cette phase d'enrôlement de cartes biométriques à capteurs d'empreinte. Les étuis sont fabriqués en plastique moulé par injection. Huit contacts correspondant aux contacts de la carte doivent être ajoutés au boîtier plastique et des plaques métalliques de liaison doivent être prévues pour relier les deux contacts d'alimentation à une pile embarquée. Le mode d'enrôlement de la carte biométrique peut être déclenché automatiquement lors d'une première alimentation électrique de la carte.

Ces étuis ne sont pas satisfaisants pour diverses raisons : trop coûteux en raison du procédé de fabrication, trop volumineux, peu écologiques et trop fragiles aux chocs brutaux en raison de l'usage de plastique dur et cassant, trop complexes car nécessitant l'ajout de plaques métalliques de liaison. En outre, leur procédé de fabrication est long à raison du moulage du plastique.

On connaît par ailleurs, des publications « High-throughput shadow mask printing of passive electrical components on paper by supersonic cluster beam déposition » (APPLIED PHYSICS LETTERS 108, 2016) et « 3D Folded PrintGami » (DIS 2016, 2016), l'utilisation du papier comme substrat dans la fabrication de circuits électroniques souples et pliables. Le document EP 1 222 623 divulgue une enveloppe ou un contenant équivalent sur laquelle sont imprimées des portions d'antenne RF à l'aide d'une encre conductrice.

### Exposé de l'invention

La présente invention vise à surmonter tout ou partie de ces inconvénients en proposant un nouveau type d'étui pour carte à puce.

Elle prévoit notamment un étui pour carte à puce tel que défini par la revendication 1. Cet étui est formé d'une pochette aux dimensions permettant d'y insérer une carte à puce par une fente. Il est caractérisé en ce que la pochette est en matériau de fibres cellulosiques et comprend un circuit électrique déposé à même le matériau de fibres cellulosiques qui relie électriquement des contacts électriques de la carte à une interface d'alimentation électrique lorsque la carte est insérée dans une première position.

L'interface d'alimentation électrique fait notamment partie du circuit électrique.

Les matériaux en fibres cellulosiques, préférentiellement végétales, sont typiquement le carton ou le papier. Un grammage suffisant est pris pour obtenir un étui semi-rigide, c'est-à-dire autoportant (sans rupture ou pliure) lorsque la carte est insérée dedans.

De nombreuses techniques de dépose d'encres conductrices sur un support en fibres cellulosiques, par exemple l'impression à jet d'encre, permettent de réaliser cet étui rapidement et à moindre coût. Il en résulte également des épaisseurs réduites d'étui.

Avantageusement, l'étui selon l'invention se trouve composé principalement de matériaux recyclables.

Enfin, l'élasticité naturelle du matériau utilisé rend l'étui résistant à des chocs secs et brutaux.

Cet étui peut être utilisé dans un processus d'enrôlement d'une carte à puce biométrique car il permet d'alimenter la carte à puce pour permettre l'acquisition des données biométriques de référence.

L'invention prévoit donc également un système comportant un tel étui et une carte à puce dotée d'un capteur biométrique pourvu en surface de la carte (e.g. affleurant), le capteur biométrique étant accessible depuis l'extérieur de l'étui lorsque la carte à puce est insérée dans la première position. Cela permet de réaliser les étapes d'acquisition des données biométriques.

En utilisation, l'interface d'alimentation électrique est reliée à une source électrique interne à l'étui (par exemple une pile embarquée) ou externe à l'étui (par exemple un dispositif présentant un port de connexion destiné à être couplé avec l'interface d'alimentation, tel un port USB).

Des caractéristiques optionnelles de modes de réalisation de l'invention sont définies dans les revendications dépendantes.

Dans un mode de réalisation, le circuit électrique est déposé sur une face intérieure de la pochette, l'interface d'alimentation électrique pouvant présenter une partie externe à la pochette.

Dans un mode de réalisation, le circuit électrique comporte plusieurs plots de contact agencés en une ou plusieurs positions de contact d'un motif matriciel (c'est-à-dire en lignes et colonnes) pour réaliser un contact électrique avec la carte insérée (dans la première position), la pochette comportant au moins une ouverture traversante disposée entre deux positions de contact du motif matriciel. Le motif matriciel correspond généralement à l'agencement de plages de contact sur la carte.

Les plots forment une surépaisseur par rapport à la piste électrique formant le circuit. Il peut s'agir de gouttelettes de matériau conducteur.

En pratique, deux plots reliés à l'interface d'alimentation électrique peuvent être prévus pour alimenter la carte. Un ou d'autres plots peuvent être prévus pour que la carte, dans l'exécution d'une routine d'enrôlement par exemple, pilote l'activation de composants du circuit électrique formant interface utilisateur, typiquement des diodes LEDs, un haut-parleur, des retours haptiques, un écran.

Grâce à cette disposition, les plots disposés aux positions de contact séparées par l'ouverture pratiquée dans la pochette peuvent bouger de façon indépendante grâce à l'élasticité du matériau utilisé. Un dimensionnement similaire de ces plots n'est donc plus nécessaire pour assurer un contact électrique avec la carte, réduisant les contraintes de fabrication (une tolérance plus grande est acceptée). Au final, un meilleur contact électrique est obtenu avec la carte insérée.

Selon une caractéristique, la pochette comporte une pluralité d'ouvertures disposées chacune entre deux rangées (lignes ou colonnes) successives du motif matriciel portant des plots de contact. Ainsi des lignes ou colonnes successives du motif matriciel sont séparées deux à deux par ces ouvertures. Elles définissent des zones flexibles indépendantes.

Par exemple deux ouvertures allongées peuvent être prévues entre trois lignes successives du motif portant des plots de contact, typiquement correspondant aux contacts c1-c3 et c5-c7 selon la norme ISO/IEC 7816-2. Cela permet de rendre le mouvement des trois lignes indépendant pour un meilleur contact de la carte avec les plots correspondants.

Selon une caractéristique, la pochette comporte en outre une ou plusieurs (typiquement deux) ouvertures extrémales disposées extérieurement à l'ensemble du motif matriciel portant des plots de contact. Les ouvertures extrémales peuvent être parallèles aux ouvertures de ladite pluralité ou en variante leur être perpendiculaires.

Dans l'exemple ci-dessus, il peut résulter quatre ouvertures allongées prévues de part et d'autre des trois lignes successives. Les plots des deux lignes extérieures (parmi les trois) peuvent ainsi bouger plus aisément par rapport au corps de la pochette. A nouveau, cela améliore le contact électrique avec la carte.

Une ouverture allongée peut s'entendre d'une ouverture s'étendant sur une distance égale ou supérieure à une longueur englobant les deux positions extrémales de contact d'une même ligne.

Les ouvertures pratiquées peuvent avoir les mêmes formes et dimensions.

Par exemple, le motif matriciel est formé de deux colonnes de quatre lignes conformément au standard ISO/IEC 7816-2 : 2007. Dans ce cas-là, les bords extérieurs des deux contacts d'une ligne sont distants d'au moins 9,62 mm. La longueur de l'ouverture allongée peut être prévue supérieure à cette valeur, par exemple sensiblement de la longueur correspondante de la zone de contacts affleurant de la carte, notamment entre 12 et 20 mm.

La largeur de l'ouverture peut être, quant à elle, comprise entre 0,1 et 1 mm, typiquement entre 0,3 et 0,8 mm. Cela permet notamment d'utiliser efficacement l'espace prévu entre les positions de contact de deux lignes différentes, typiquement 0,84 mm dans le standard susvisé.

Dans un mode de réalisation, le circuit électrique est constitué d'une ou plusieurs portions de piste conductrice déposées sur la pochette, d'une ou plusieurs composants (e.g. diodes LED) formant interface utilisateur et optionnellement d'une source d'énergie. Cette constitution simple du circuit électrique permet une fabrication peu complexe à moindre coût.

Dans un mode de réalisation, la pochette en matériau de fibres cellulosiques est formée d'une seule pièce. Cette pièce ou « flan » est ainsi pliée et collée, le cas échéant, pour former la pochette. A nouveau, cette disposition simplifie les opérations et le coût de fabrication.

Selon une caractéristique particulière, la pochette comporte des moyens de guidage de la carte vers la première position, les moyens de guidage étant formés par des rabats fixant ensemble un panneau avant et un panneau arrière de la pochette. Les rabats sont typiquement reliés, de façon articulée, à l'un des panneaux. Notamment, les rabats peuvent présenter un bord en biseau du côté de la fente d'insertion afin de faciliter l'introduction de la carte dans l'étui.

L'invention concerne ainsi également un flan pour étui à carte tel que défini en revendication 12. Ce flan est caractérisé en ce qu'il est en matériau de fibres cellulosiques et comprend deux panneaux adjacents et articulés destinés à former les deux faces d'un étui en forme de pochette aux dimensions permettant d'y insérer une carte à puce par une fente (par exemple constituée par un côté de la pochette), un circuit électrique étant déposé à même le matériau de fibres cellulosiques d'au moins un premier desdits panneaux, le circuit électrique comportant, sur le premier panneau, des plots de contact agencés de sorte à relier électriquement des contacts électriques de la carte à une interface d'alimentation électrique lorsque la carte est insérée dans une première position dans l'étui en forme de pochette.

Dans un mode de réalisation, les plots de contact sont agencés en une ou plusieurs positions de contact d'un motif matriciel pour réaliser un contact électrique avec la carte insérée dans la première position, et le premier panneau comporte au moins une ouverture disposée entre deux positions de contact du motif matriciel.

Préférentiellement, le premier panneau comporte une pluralité d'ouvertures disposées chacune entre deux rangées (lignes ou colonnes) successives du motif matriciel portant des plots de contact, et deux ouvertures extrémales parallèles (en variante perpendiculaires) aux ouvertures de ladite pluralité et disposées extérieurement à l'ensemble du motif matriciel portant des plots de contact.

En variante, une pochette fabriquée à partir de plusieurs morceaux assemblés peut être envisagée.

L'invention concerne également un procédé de fabrication d'un étui pour carte à puce tel que défini en revendication 15. Ce procédé comprend les étapes suivantes :
formation d'un flan en matériau de fibres cellulosiques, comprenant deux panneaux adjacents et articulés destinés à former les deux faces d'un étui en forme de pochette aux dimensions permettant d'y insérer une carte à puce par une fente (par exemple constituée par un côté de la pochette), un circuit électrique étant déposé à même le matériau de fibres cellulosiques d'au moins un premier desdits panneaux, le circuit électrique comportant, sur le premier panneau, des plots de contact reliés à une interface d'alimentation électrique,
obtention de l'étui en forme de pochette par pliage et collage du flan de sorte que les plots de contact relient électriquement des contacts électriques d'une carte à l'interface d'alimentation électrique lorsque la carte est insérée dans une première position dans l'étui en forme de pochette.

Le flan peut comprendre des moyens se rapportant aux éléments décrits ci-dessus en lien avec l'étui pour carte à puce, typiquement des rabats permettant de fermer le flan en étui et pouvant agir comme moyens de guidage/butée de la carte lors de son insertion.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
[Fig. 1] La **Figure 1** illustre un premier exemple de carte à puce.
[Fig. 2] La **Figure 2** illustre un deuxième exemple de carte à puce.
[Fig. 3] La **Figure 3** illustre un étui d'enrôlement pour cartes à puce selon une mise en oeuvre de l'invention.
[Fig. 4] La **Figure 4** illustre un exemple de circuit électrique déposé à même une face interne de l'étui d'enrôlement pour alimenter une carte à puce qui y est introduite.
[Fig. 4a] La **Figure 4a** illustre le contact électrique entre les plages de contact de la carte à puce et des plots du circuit électrique de la **Figure 4****.**
[Fig. 5a] La **Figure 5a** illustre un premier mode de réalisation d'un étui d'enrôlement.
[Fig. 5b] La **Figure 5b** illustre un deuxième mode de réalisation d'un étui d'enrôlement.
[Fig. 5c] La **Figure 5c** illustre un troisième mode de réalisation d'un étui d'enrôlement.
[Fig. 5d] La **Figure 5d** illustre un quatrième mode de réalisation d'un étui d'enrôlement.
[Fig. 5e] La **Figure 5e** illustre un cinquième mode de réalisation d'un étui d'enrôlement.
[Fig. 6a] La **Figure 6a** illustre la découpe d'un flan pour la fabrication selon un mode de réalisation de l'invention d'un étui d'enrôlement.
[Fig. 6b] La **Figure 6b** illustre l'impression de portions de piste conductrice sur le flan de la **Figure 6a** pour la fabrication de l'étui d'enrôlement.
[Fig. 6c] La **Figure 6c** illustre la réalisation d'ouvertures dans le flan de la **Figure 6b** pour la fabrication de l'étui d'enrôlement dans la configuration de la **Figure 5c****.**
[Fig. 6d] La **Figure 6d** illustre la mise en place de composants électroniques sur le flan de la **Figure 6c** puis son pliage et son collage pour la fabrication de l'étui d'enrôlement.
[Fig. 7] La **Figure 7** illustre une variante de l'étui d'enrôlement de la **Figure 5c** sans rabat de guidage au niveau de l'articulation entre les panneaux formant faces de l'étui.
[Fig. 8a] La **Figure 8a** illustre la découpe d'un flan pour la fabrication selon un mode de réalisation de l'invention d'un étui d'enrôlement sans rabat de guidage au niveau de l'articulation entre les panneaux formant faces de l'étui.
[Fig. 8b] La **Figure 8b** illustre l'impression de portions de piste conductrice sur le flan de la **Figure 8a** pour la fabrication de l'étui d'enrôlement.
[Fig. 8c] La **Figure 8c** illustre la réalisation d'ouvertures dans le flan de la **Figure 8b** pour la fabrication de l'étui d'enrôlement dans la configuration de la **Figure 7****.**
[Fig. 8d] La **Figure 8d** illustre la mise en place de composants électroniques sur le flan de la **Figure 8c** puis son pliage et son collage pour la fabrication de l'étui d'enrôlement.
[Fig. 9] La **Figure 9** illustre une variante du flan pour étui d'enrôlement de la **Figure 6d****.**
[Fig. 10] La **Figure 10** illustre une variante du flan pour étui d'enrôlement de la **Figure 8d****.**
[Fig. 11a] La **Figure 11a** illustre, en vue arrière, un autre mode de réalisation d'un étui d'enrôlement adapté à une carte à puce selon la **Figure 2****.**
[Fig. 11b] La **Figure 11b** illustre, en vue avant, l'étui d'enrôlement de la **Figure 11a****.**
[Fig. 12] La **Figure 12** illustre un exemple de flan pour l'étui d'enrôlement des **Figures 11a** et **11b****,** dans un état final avant pliage et collage.

### Description détaillée

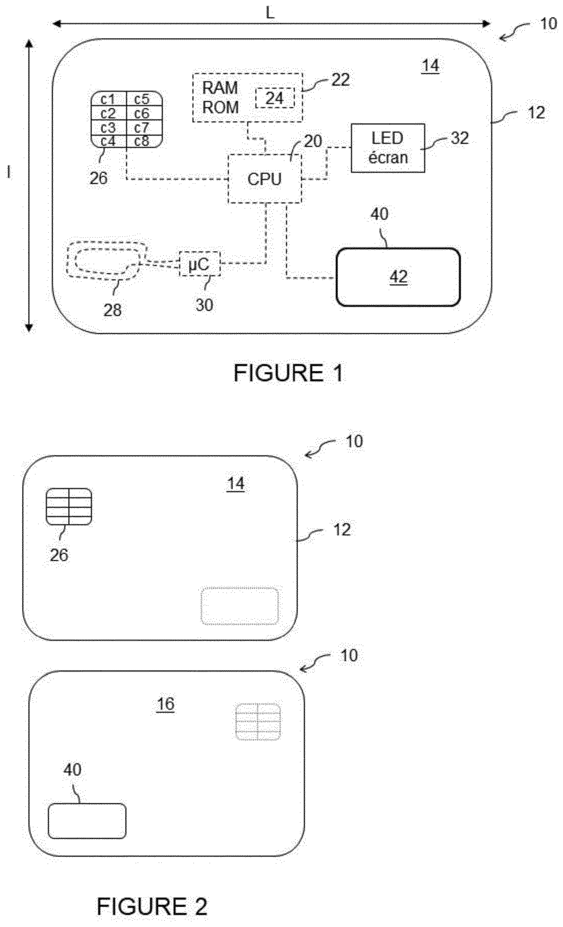

La **Figure 1** représente une carte à puce 10 qui constitue un exemple de carte à circuit intégré. Dans cette exemple, les composants représentés en pointillés sont généralement cachés dans le corps de carte 12 alors que les composants représentés en traits continus sont visibles.

La carte peut être destinée à l'accès à des services (paiement, téléphone, transport).

La carte à puce 10, de largeur l et longueur L, comporte donc un corps de carte 12 en plastique dont une surface principale (ici face avant) 14 comporte généralement des impressions graphiques. La carte 10 peut être au format 1FF au sens de la norme ISO/IEC 7810: 2003, ID-1.

La carte 10 comporte un module électronique 20 et des mémoires associées (RAM, ROM) 22 mémorisant des instructions de code 24 pour le fonctionnement de la carte, notamment un programme d'enrôlement.

Elle comporte également une ou plusieurs interfaces de communications avec l'extérieur, notamment un ensemble de bornes ou plots de contacts 26 affleurant la surface supérieure 14 et optionnellement une antenne 28 commandée par un microcontrôleur 30 de communication sans contact (type NFC).

L'interface 26 est de préférence conforme à la norme ISO/IEC 7816 -2, par exemple dans sa version 2007. L'interface 26 est composées de huit contacts électriques répartis selon un motif matriciel de deux colonnes de quatre lignes. A chaque position matricielle correspond une position de contact électrique dénoté c1 à c8 selon la norme. Traditionnellement les contacts c1 et c5 de la première ligne sont utilisés aux fins d'alimentation de la carte alors que les contacts c4 et c8 ne sont pas utilisés.

L'interface 28-30 est conforme à la norme ISO/IEC 14443.

Lorsque la carte 10 est présentée à un lecteur (par contact ou sans contact), elle est alimentée par ce dernier via l'interface correspondante. Les instructions de code 24 peuvent alors être exécutées automatiquement ou sur commande.

La carte 10 comporte également un ou plusieurs capteurs biométriques 40 et optionnellement un ou des interfaces utilisateur 32, typiquement des LEDs et/ou un afficheur, pour renseigner l'utilisateur de différents états ou informations de la carte.

Les différents composants sont reliés entre eux par un ou des bus informatiques.

Le capteur biométrique 40 comporte une zone 42 d'acquisition, généralement affleurant la surface supérieure 14 de la carte 10.

Dans l'exemple représenté, le capteur biométrique 40 est un capteur capacitif d'empreinte digital, par exemple fabriqué selon le procédé décrit dans la publication FR 3 061 333 A1.

Le capteur capacitif 40 est formé d'une zone 42 de pixels.

D'autres capteurs biométriques peuvent être utilisés, par exemple de façon non exhaustive un capteur optique, un capteur à luminescence, un capteur à imagerie multispectrale, un capteur thermique, un capteur à ultrason.

La **Figure 2** représente une carte similaire 10 dont le capteur biométrique 40 est pourvu sur la face arrière 16 (opposée à la surface principale 14 portant les plages de contact 26) du corps de carte 12.

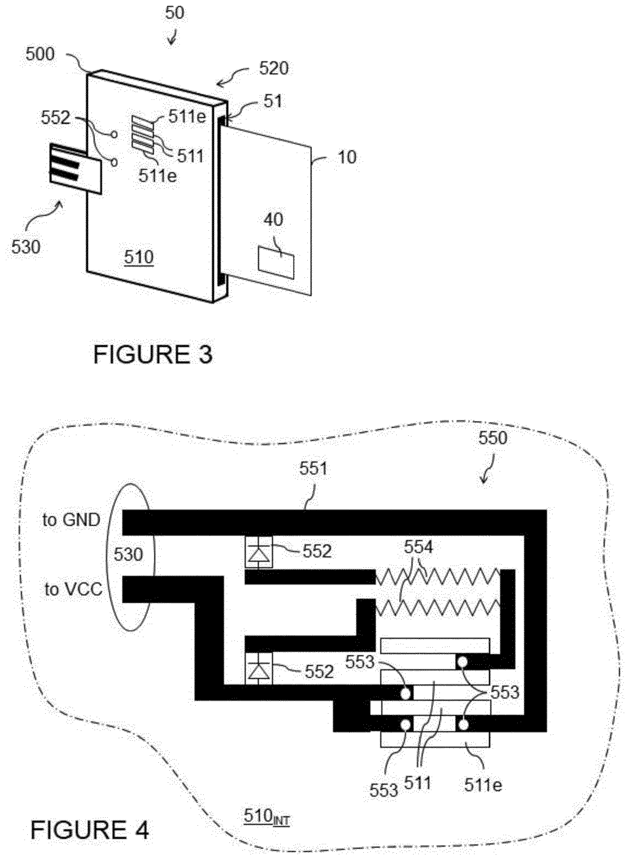

La **Figure 3** montre un étui d'enrôlement 50 et une carte à puce 10 insérée dans celui-ci par une fente 51. La carte à puce 10 est en position pour l'enrôlement. Bien entendu, un tel étui peut être utilisé pour d'autres opérations utilisant la carte 10 que le simple enrôlement pris ici à titre illustratif.

L'étui est formé d'une pochette 500 semi-rigide en matériau de fibres de cellulose végétale, typiquement en carton. La pochette est aux dimensions permettant d'y insérer la carte 10 par la fente 51. Elle est formée de deux panneaux aux dimensions similaires, l'un formant face avant 510 et l'autre formant face arrière 520, rendus solidaires l'un à l'autre, par exemple par collage de rabats sur trois de leurs côtés. Le dernier côté, non collé, est formé par la fente d'insertion 51.

Les panneaux peuvent être personnalisés sur leur face externe (par opposition à l'intérieur de l'étui) par simple impression sur le carton, notamment le panneau arrière 520, pour y placer un logo ou des instructions à suivre pour les opérations d'enrôlement.

Dans la position d'enrôlement représentée sur la Figure, le capteur biométrique 40 est accessible depuis l'extérieur de l'étui 50 permettant à l'utilisateur d'utiliser le capteur pendant l'enrôlement. Dans cette position, la carte 10 peut être alimentée par une source d'alimentation électrique de 3 à 5V soit interne soit externe via une interface d'alimentation électrique 530, ici représentée sous forme de fiche mâle USB s'étendant à partir d'un des bords collés de la pochette 500.

Lorsque l'étui 50 est inséré, par l'interface 530, dans une prise correspondante alimentée, la carte 10 est alimentée grâce à un circuit électrique déposé à même le matériau de fibres cellulosiques de la pochette qui relie électriquement des contacts électriques 26 de la carte 10 à l'interface d'alimentation électrique 530 lorsque la carte est insérée dans la position d'enrôlement.

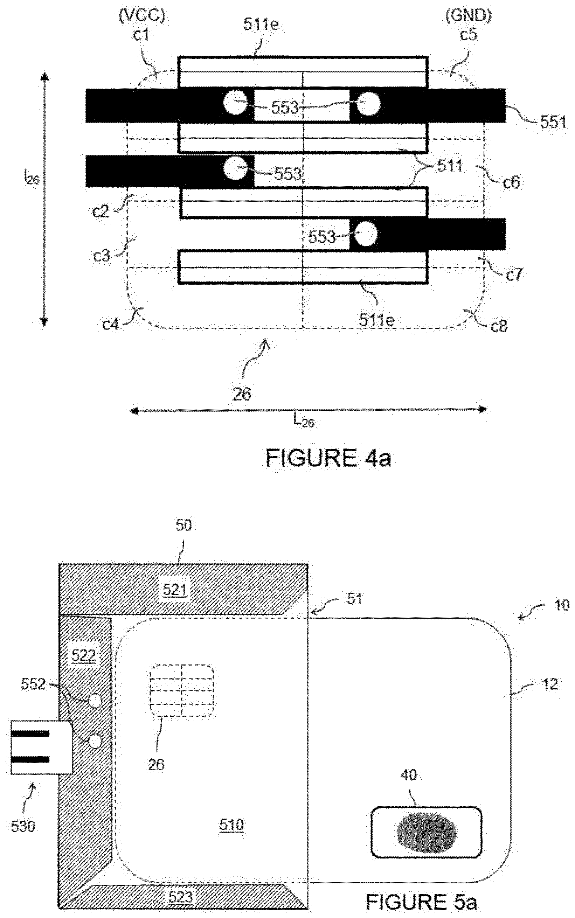

La **Figure 4** illustre un exemple de circuit électrique 550 permettant cette connexion électrique entre les contacts 26 et l'interface 530.

Le circuit électrique 550 est imprimé sur la face interne ou intérieure d'un des panneaux.

La **Figure 4** montre l'impression sur la face interne 510_{INT} du panneau avant 510. Des variantes sont illustrées plus loin.

Le circuit électrique 550 est constitué de portions (ou segments) de piste conductrice (portions noires) 551 et de composants électroniques connectés à la piste, ici deux diodes LEDs 552.

Les portions de piste conductrice comportent plusieurs plots de contact 553 agencés pour réaliser un contact avec les plages 26 de la carte 10 comme montré sur la **Figure 4a** (vue en transparence depuis la face externe du panneau 510) lorsque la carte est en position d'enrôlement. Les plots de contact 553 peuvent être formés par des gouttelettes conductrices ou des rivets sertis (en matériau conducteur).

Comme montré sur la figure, les plots 553 sont agencés en une ou plusieurs positions de contact d'un motif matriciel. Dans l'exemple, le motif utilisé est celui du standard 7816-2: 2007 composé de deux colonnes de quatre lignes, correspondant aux contacts c1 à c8 (contacts représentés en pointillés). Les plots 553 au regard des contacts c1 et c5 sont directement reliés aux portions de piste VCC et GND de l'interface 530 aux fins d'alimentation de la carte 10 lorsque l'étui 50 est inséré dans un dispositif d'alimentation par son interface 530.

D'autres plots 553 (ici deux plots au regard des contacts c2 et c7) peuvent être prévus, lesquels permettent au programme d'enrôlement 24, lorsqu'il est exécuté, de commander une interface utilisateur représentée ici par les deux diodes LEDs 552, également visibles sur le panneau avant 510 (voir **Figure 3**). L'interface utilisateur 552 peut notamment guider l'utilisateur lors des différentes étapes constituant l'opération d'enrôlement.

Bien entendu, d'autres interfaces utilisateur que des LEDs, par exemple un haut-parleur ou des composants haptiques (basés sur des composants piézoélectrique ou PVDF), peuvent être prévues.

Les portions de piste conductrice comportent également des résistances électriques 554 formées d'une piste conductrice. La longueur, la largeur, l'épaisseur ainsi que le matériau utilisé de la piste conductrice sont déterminés en fonction des caractéristiques de résistance électrique souhaitées. Telles qu'illustrées, les résistances électriques 554, formées dans le même matériau que les portions de piste conductrice, présentent une largeur réduite (comparativement aux portions adjacentes 551) et une forme en zig-zag.

Dans l'exemple, les résistances 554 connectent le plot 553 pour le contact c7 aux deux diodes LEDs 552. Préférentiellement, les résistances électriques 554 sont imprimées sur une zone de la pochette 500 peu soumise à torsion mécanique, typiquement éloignée des bords de la pochette (donc des bords des panneaux formant faces de l'étui).

Comme indiqué plus haut, en variante à l'utilisation d'une interface USB 530, la source d'alimentation peut être interne à l'étui 50. Une interface d'alimentation électrique est donc prévue dans le circuit, à l'intérieur de l'étui formé. La source d'alimentation, typiquement une batterie, peut être placée dans l'étui, en contact avec l'interface d'alimentation électrique interne. Dans une variante, l'étui 50 peut être pourvu, sur une surface externe d'un des panneaux 510/520, d'un marquage indiquant où réaliser une découpe pour y introduire une batterie (par exemple sous forme de pile bouton) de telle sorte que celle-ci se trouve en contact avec l'interface d'alimentation électrique interne.

Les **Figures 5a** à **5c** illustrent différentes variantes de l'étui 50 d'enrôlement selon un premier mode de réalisation. Ces étuis diffèrent les uns des autres par le nombre d'ouvertures 511, et leur agencement, pratiquées sur le panneau avant 510 entre des plots 553 pour rendre le mouvement de ceux-ci indépendant et ainsi garantir un meilleur contact avec les plages de contact 26 de la carte. Bien que ces variantes soient illustrées avec une interface USB 530, elles s'appliquent également à tout type d'interface d'alimentation électrique.

Le circuit électrique 550 et notamment les plots de contact 553 ne sont pas représentés en transparence pour une meilleure lisibilité des figures.

Sur la **Figure 5a****,** le panneau avant 510 ne comporte aucune ouverture au droit des contacts 26 de la carte.

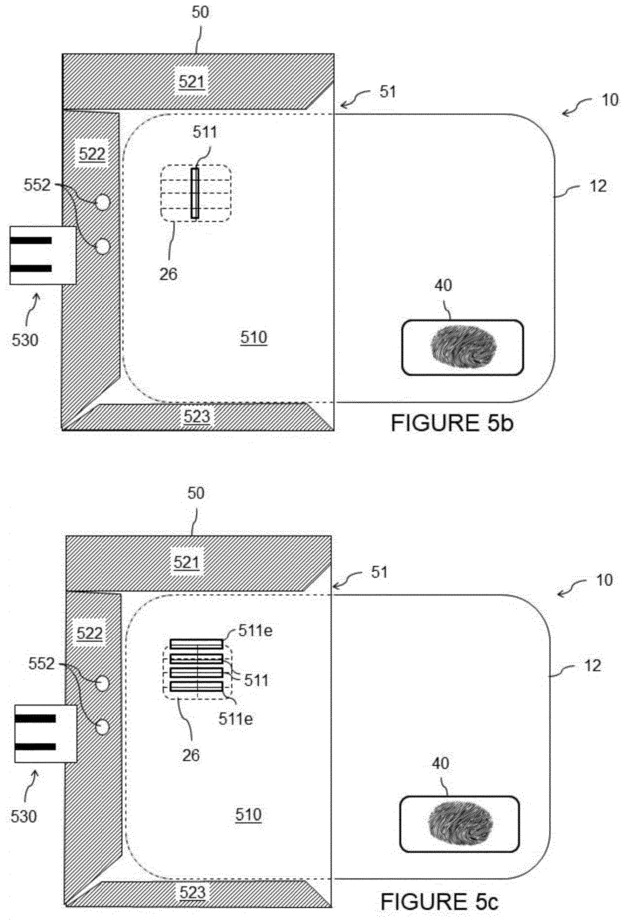

Sur les **Figures 5b** et **5c****,** le panneau avant 510 de la pochette 500 comporte au moins une ouverture traversante disposée entre deux positions de contact du motif matriciel, donc entre deux plots 553.

Dans l'exemple de la **Figure 5b****,** une unique ouverture allongée verticale 511 est prévue qui sépare les plots relatifs aux deux colonnes de contacts c1-c4 et c5-c8 respectivement. Dans l'exemple représenté, la longueur de l'ouverture traversante 511 est sensiblement égale à la largeur l₂₆ (ou hauteur) du module de contacts 26 de la carte 10.

Dans l'exemple de la **Figure 5c** qui correspond au cas des **Figures 4** et **4a****,** le panneau avant 510 de la pochette comporte une pluralité d'ouvertures 511 disposées chacune entre deux rangées, ici des lignes, successives du motif matriciel portant des plots de contact. Par exemple dans le cas de la **Figure 4a****,** des plots sont prévus sur les trois premières lignes correspondant aux contacts c1/c5, c2/c6 et c3/c7 (les contacts c4 et c8 demeurent inutilisés). Les ouvertures 511 séparent ces trois lignes deux à deux, leur offrant une liberté de mouvement relatif. Par conséquent, la languette de carton entre les deux ouvertures 511 présente une flexibilité améliorée, permettant un contact amélioré du ou des plots qu'elle porte.

En outre et de façon optionnelle, des ouvertures extrémales 511e parallèles aux ouvertures 511 sont prévues extérieurement à l'ensemble des trois lignes du motif matriciel portant des plots de contact. Cela permet d'améliorer la liberté de mouvement des deux lignes extrémales (ici celles correspondant à c1/c5 et c3/c7) par rapport au reste du panneau avant 510. Notamment, les languettes de carton entre les ouvertures 511 et 511e présentent une flexibilité améliorée, permettant un contact amélioré du ou des plots qu'elles portent.

Chaque ouverture 511, 511e est traversante.

Chaque ouverture 511, 511e présente une longueur supérieure à la distance séparant les bords extérieurs des deux contacts (par exemple c1 et c5) d'une même ligne du motif selon la norme susvisée, c'est-à-dire supérieure à 9,62 mm. Sur la Figure, la longueur des ouvertures est inférieure à la largeur de la zone de contact 26 de la carte 10. Elle peut cependant lui être égale ou supérieure. La longueur de l'ouverture peut donc être supérieure à 10 mm, préférentiellement entre 12 et 20 mm.

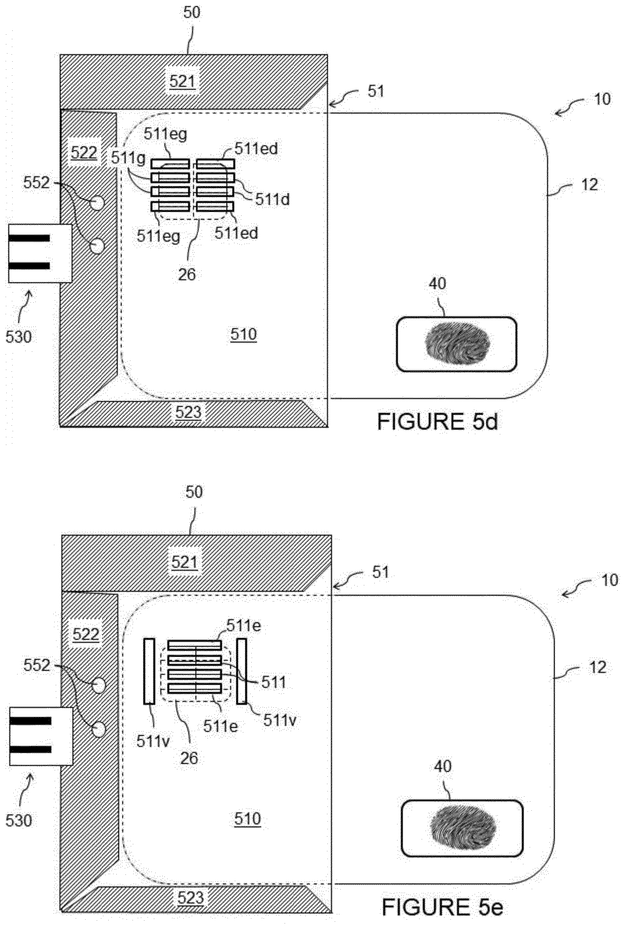

Dans la variante représentée en **Figure 5d****,** la pluralité d'ouvertures comporte au moins deux ouvertures distinctes 511g et 511d séparant les positions de contact de deux lignes (plus généralement rangées, incluant les colonnes) successives du motif matriciel. De même au moins deux (ici deux) ouvertures extrémales 511eg et 511ed sont prévues du même côté extérieurement aux lignes du motif matriciel portant des plots de contact. Cela permet d'améliorer la flexibilité indépendante des plots de contact d'une même ligne du motif matriciel. Dans l'exemple illustré, des paires d'ouvertures sont prévues au lieu d'une seule ouverture de la **Figure 5c****.** La partie centrale de carton non découpée entre les ouvertures d'une même paire peut être d'environ 1,5 à 2mm. De ce fait, les ouvertures 511g, 511d, 511eg et 511ed ont typiquement une longueur comprise entre 5 et 9,25 mm. Dans le cas d'un motif matriciel présentant plus de deux positions de contact par ligne, un plus grand nombre d'ouvertures par ligne peut être prévu.

Il est possible de mélanger des ouvertures selon la **Figure 5c** (par exemple pour les ouvertures extrémales 511e) et des ouvertures selon la **Figure 5d** (par exemple pour les ouvertures 511g, 511d entre des lignes successives portant des plots de contact).

Chaque ouverture 511, 511e, 511g, 511d, 511eg et 511ed présente une largeur inférieure à la distance séparant l'entraxe de deux contacts de deux lignes consécutives (par exemple c1 et c2) selon la norme susvisée diminuée de la demi largeur de chaque plot correspondant et de la tolérance sur la découpe, c'est-à-dire typiquement compris entre 0.1mm et 1 mm.

Toutes les ouvertures pratiquées sur le même étui peuvent avoir les mêmes dimensions et/ou formes (par exemple rectangulaires).

La **Figure 5e** illustre une variante de la **Figure 5c** où des ouvertures extrémales 511v perpendiculaires (ici verticales) aux ouvertures 511 sont ajoutées extérieurement à l'ensemble du motif matriciel portant les plots de contact. Les ouvertures extrémales verticales 511v peuvent également être combinées avec les ouvertures de la **Figure 5d** et/ou en l'absence des ouvertures extrémales parallèles 511e, 511ed, 511eg.

Ces ouvertures perpendiculaires permettent de surélever, par l'action mécanique des plots 553 sur les contacts 26 de la carte, toute la zone du panneau 510 au regard des contacts 26, tout en garantissant la flexibilité indépendante des différentes languettes de carton portant les plots 533 pour un meilleur contact électrique.

Dans un mode de réalisation, la longueur des ouvertures 511, 511e est réduite comparativement à la **Figure 5c** pour positionner les ouvertures extrémales verticales 511v à proximité des plots 553. La longueur des ouvertures 511, 511e est par exemple comprise entre 12 et 16 mm.

La longueur des ouvertures extrémales verticales 511v est de l'ordre de grandeur de la hauteur du module de contacts 26 de la carte, typiquement de 8 à 16 mm pour le cas de la norme ISO/IEC 7816-2 : 2007.

Les **Figures 5a** à **5e** montrent, en parties hachurées, des guides 521, 522, 523 pris en sandwich entre le panneau avant 510 et le panneau arrière 520. Les guides servent à guider la carte 10 vers la position d'enrôlement.

Les guides 521 et 523 comprennent une partie biseautée du côté de la fente 51 en direction de l'intérieur de l'étui, facilitant ainsi l'insertion de la carte 10 dans l'étui 50.

Le guide 522 prévu au fond de la pochette relativement à la fente 51 (c'est-à-dire du côté opposé) officie comme moyen de butée de la carte 10 en position d'enrôlement.

Ces guides peuvent être formés par des rabats articulés à l'un ou les deux panneaux 510, 520 et fixant ensemble le panneau avant 510 et le panneau arrière 520.

Avantageusement, l'épaisseur des rabats permet de réaliser une entretoise entre les deux panneaux 510, 520 pour l'insertion de la carte 10. L'entretoise (formée idéalement d'une seule épaisseur de carton avec adhésif) est supérieure ou égale à l'épaisseur maximale d'une carte telle que spécifiée dans la norme susvisée augmentée de l'épaisseur des plots de contact 530.

Les dimensions des guides sont déterminées de sorte à permettre le bon positionnement des contacts 26 au regard des plots 553 dans la position d'insertion (d'enrôlement) de la carte 10.

Les dimensions des panneaux 510 et 520 (et donc de l'étui 50) sont choisies de sorte à permettre, dans cette position d'insertion de la carte 10, au capteur biométrique 40 d'être entièrement extérieur à l'étui 50 et ainsi être accessible facilement à l'utilisateur.

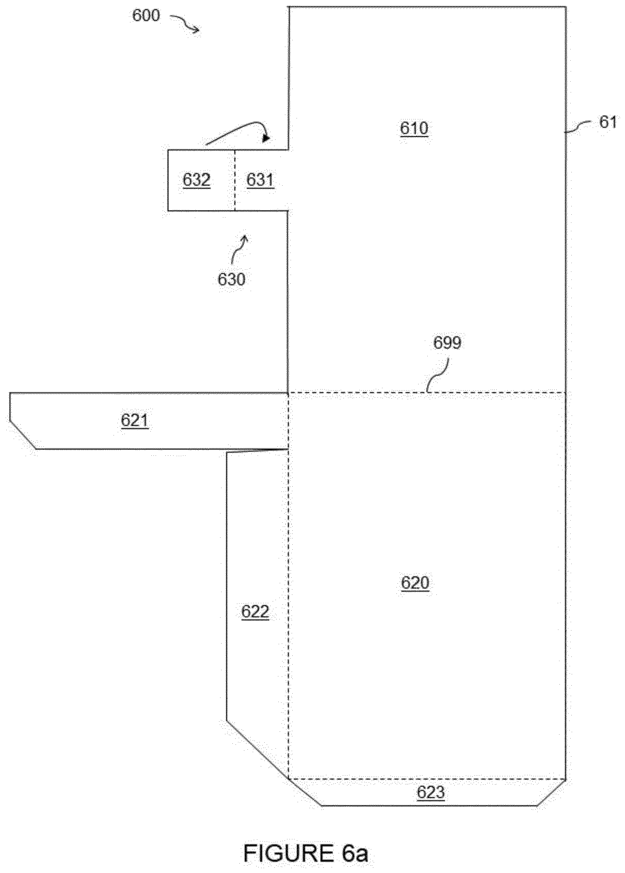

Les Figures **6a** à **6d** illustre un procédé de fabrication d'un tel étui 50 formée d'une seule pièce, notamment dans la version illustrée sur les **Figures 4****,** **4a** et **5c****.** La flan 600, de préférence en carton ou tout matériau recyclable, est d'une épaisseur comprise entre 0.8 et 1.2 mm permettant de réaliser l'entretoise souhaitée.

La **Figure 6a** montre un flan vierge découpé en une pièce depuis une même plaque de carton. Il comprend deux panneaux rectangulaires adjacents et articulés 610 et 620 destinés à former les deux faces/panneaux 510 et 520 de l'étui 50 lorsqu'ils sont repliés l'un sur l'autre le long d'un bord commun formant articulation 699 (les articulations sont généralement représentées sous forme de traits discontinus). Les bords 61 (des panneaux) orthogonaux à l'articulation 699 définissent les bords de la fente 51 d'insertion, lorsque les panneaux sont repliés.

Une languette 630, formée d'une seule pièce avec le panneau 610, s'étend perpendiculairement au premier panneau 610 sur le bord opposé au bord 61 formant fente 51, sur une première portion 631 articulée à une portion extrémale 632 plus longue. Les deux portions 631 et 632 sont articulées par un bord commun.

La languette 630 est destinée à former l'interface d'alimentation 530 (dans le cas d'une source d'alimentation externe). Pour ce faire, la portion extrémale 632 a vocation à être repliée et collée au dos de la portion 631 afin de conférer une rigidité à l'interface 630. La largeur de la languette 630 correspond avantageusement à la largueur d'une fiche mâle USB. L'épaisseur des deux portions collées correspond à l'épaisseur du support interne d'un connecteur mâle USB. Si ce n'est pas le cas, d'autres portions, éventuellement articulées (repliées puis collées) et formées dans la même pièce de carton, peuvent être prévues pour obtenir l'épaisseur souhaitée.

Le deuxième panneau 620 comporte trois rabats articulés 621, 622, 623 s'étendant sur les deux bords autres que l'articulation 699 et le bord 61 formant fente 51, qui lorsqu'ils sont pliés permettent de maintenir, par collage (préférentiellement des deux côtés), les deux panneaux 610 et 620 ensemble pour former l'étui 50 avec l'entretoise souhaitée. Dans la configuration proposée, ces rabats forment guides 521, 522, 523 comme exposés plus haut.

L'articulation 699 et les rabats articulés 622 et 623 permettent de fermer le flan 600 en une pochette 500 présentant l'entretoise souhaitée et une fente 51 formé par les bords 61 des deux panneaux.

Le rabat 621 présente un bord dans la continuité de l'articulation 699. Ce bord est perpendiculaire à l'articulation du rabat 621 avec le deuxième panneau 620. Ainsi en position repliée du rabat, ce bord s'aligne avec l'articulation 699 renforçant cette dernière.

Les rabats 621 et 623 permettent, notamment par leurs extrémités en biseau du côté du bord 61 formant fente 51, de faciliter l'insertion de la carte 10 dans l'étui 50 (voir **Figure 5c**).

En variante, les rabats 621 et 623 peuvent être prévus reliés, articulés, au premier panneau 610 dans des configurations symétriques (par rapport à l'articulation 699) à ce qui est décrit ci-dessus.

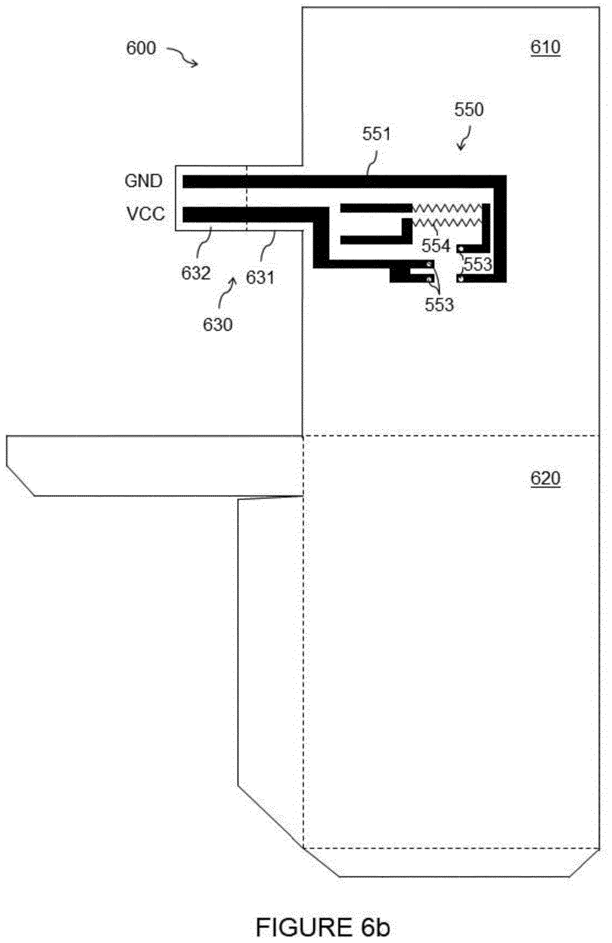

La **Figure 6b** montre le dépôt des portions de piste conductrice 551 (incluant les résistances 554) à même le flan en carton 600, notamment sur une seule face du flan 600, en particulier sur une seule face du panneau 610 destinée à former la face intérieure 510_{INT} du panneau avant 510. Une impression sur une seule face du flan présente un avantage en terme de coût de conception.

Ces portions de piste 551 sont formées à l'emplacement prévu pour que les plots 553 finalement formés soient positionnés au droit des contacts 26 correspondants de la carte 10, lorsque cette dernière est en position d'insertion (voir **Figure 4a**).

Des techniques classiques de fabrication additive des portions de piste, typiquement par impression par jet d'encre, impression par offset, impression en flexographie ou sérigraphie, peuvent être utilisées pour ce dépôt. Une encre conductrice, à base de particules d'argent ou de cuivre ou de graphite, peut être utilisée. Pour le cas de l'usage d'une encre à base de cuivre, il pourra être envisagé le dépôt d'une couche supplémentaire à base de graphite aux fins de protéger la piste cuivre d'une oxydation.

Bien entendu, d'autres techniques de revêtement (« coating ») peuvent être utilisées pour former les portions de piste 551.

Les portions de piste d'alimentation VCC et GND s'étendent jusqu'aux portions 631 et 632 de la languette 630 formant interface d'alimentation 530. L'écartement et la largeur des portions de piste à cet endroit est conforme à l'interface souhaitée, par exemple au format USB. Lorsque la portion extrémale 632 est repliée et collée au dos de la portion 631, les portions de piste VCC et GND de la portion extrémale 632 sont avantageusement orientées sur la face avant de l'étui 50 (voir **Figure 5c**) pour une mise en contact électrique avec une prise USB femelle d'une source externe. Ainsi, lorsque l'étui est introduit dans le port USB de la source externe via son interface 530, le capteur biométrique 40 (de la **Figure 1**) et les LEDs 552 sont facilement accessibles sur le dessus de la carte 10 ainsi positionnée dans l'étui 50.

Afin de protéger les portions de piste VCC et GND de la première portion 631 (portions de piste orientées vers l'arrière de la carte) formant l'interface d'alimentation 530, on peut prévoir le dépôt d'une couche de protection isolante sur la première portion 631 et optionnellement sur la zone d'articulation entre les portions 631 et 632. Cela évite notamment tout court-circuit par des éléments conducteurs prévus dans la prise femelle USB dans laquelle sera introduite l'interface d'alimentation 530.

Les plots 553 sont formés aux emplacements prévus, par exemple par collage de billes conductrices à l'aide d'un adhésif conducteur, par impression d'une surépaisseur (3D) de matériau conducteur (typiquement de gouttelettes) ou par fixation de rivets sertis.

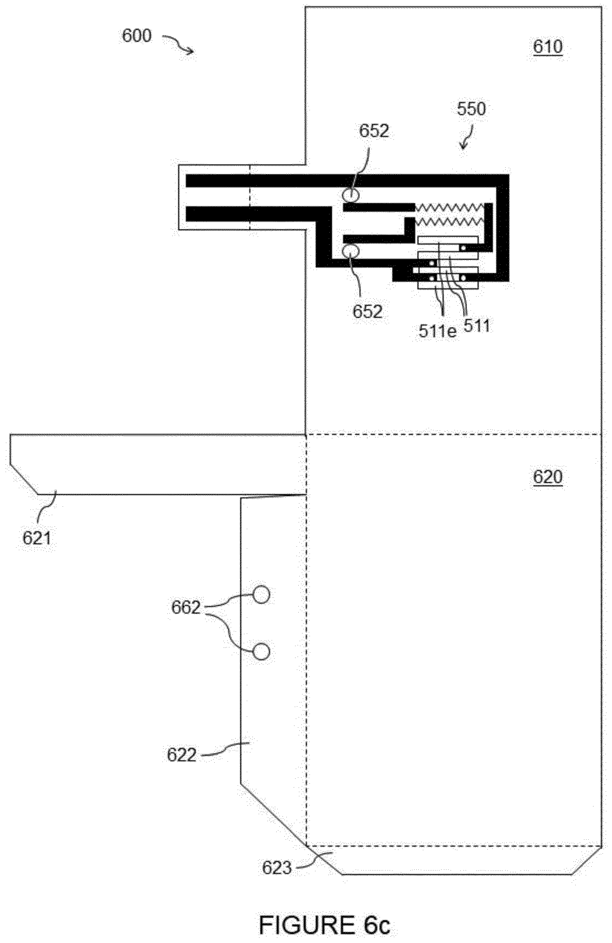

La **Figure 6c** montre l'étape suivante consistant à réaliser les ouvertures traversantes 511, 511e aux emplacements idoines relativement aux contacts 26 d'une carte 10 introduite en position d'enrôlement. Comme montré sur la **Figure 4a****,** un mode de réalisation prévoit la réalisation de quatre ouvertures rectangulaires identiques de part et d'autre des trois lignes c1/c5, c2/c6 et c3/c7 du format ISO 7816. Les zones de carton portant les plots 553 au regard de chacune de ces lignes sont ainsi avantageusement pourvues d'une élasticité facilitant le contact électrique des plots avec les contacts 26. Bien entendu, d'autres agencements d'ouvertures peuvent être mis en oeuvre selon l'étui souhaité.

Des moyens classiques de poinçonnage peuvent être utilisés.

En outre, des trous 652 sont pratiqués dans le panneau 610 aux emplacements prévus pour les diodes LEDs 552. Ces trous sont préférablement de diamètre inférieur à celui des diodes 552 de telle sorte que celles-ci soient maintenus dans la pochette 500 par le pourtour des trous.

Des trous de dégagement 662 des diodes sont aussi prévus sur le rabat 622 au droit des trous 652 une fois le rabat 622 plié et l'étui 50 formé (**Figure 5c**)**.** Ces trous ont un diamètre supérieur aux dimensions des diodes 552 de sorte à former une cavité pour celles-ci dans l'étui formé 50, sans qu'elles soient écrasées par le rabat 622.

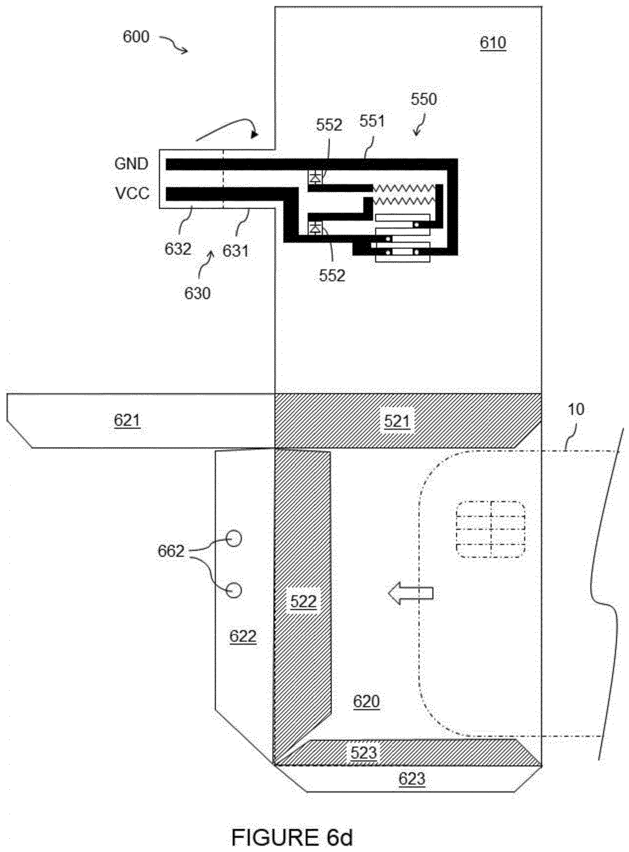

L'étape suivante illustrée par la **Figure 6d** consiste en l'insertion des diodes 552 dans le circuit 500. Par exemple, les diodes LEDs 552 sont collées à l'aide d'un adhésif conducteur afin de favoriser le contact électrique de leurs bornes avec les portions de piste conductrice 551.

Optionnellement, une goutte de résine à base d'époxy peut être déposée (technique dite « globtop ») sur les diodes 552 pour les protéger et pour une meilleure tenue mécanique. Egalement un remplissage sous ou sur les diodes 552 à l'aide d'une résine époxy (technique dite « underfill ») peut être envisagée pour une meilleure tenue mécanique.

L'étape finale consiste alors au pliage et au collage du flan 600 ainsi produit. Notamment :
- la portion extrémale 632 est pliée et collée contre la première portion 631 par leurs faces ne portant pas les portions de piste VCC et GND,
- les rabats 621, 622, 623 sont pliés et collés sur les zones 521, 522, 523 respectivement (parties hachurées sur la **Figure 6d**),
- les deux panneaux 610 et 620 sont pliés et collés ensemble (collées notamment au niveau des zones 521, 522, 523), les diodes 552 s'engageant dans les trous 662 du rabat 622..

Ainsi, l'étui 50 obtenu (**Figures 3** et **5c**) est autoportant (sans rupture ou pliure) lorsque la carte 10 est insérée dedans.

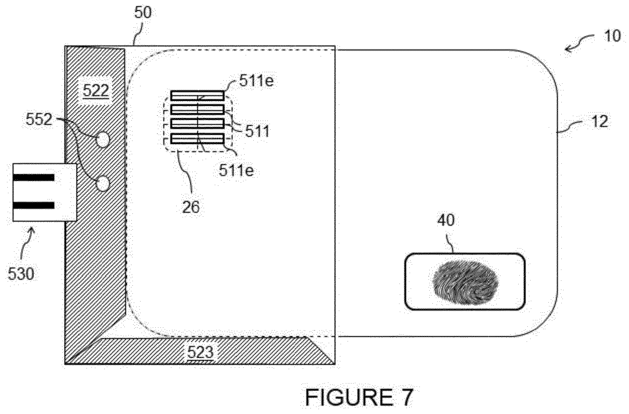

La **Figure 7** illustre une variante à la **Figure 5c** par la présence des ouvertures 511 et 511e. Cette variante est également applicable aux étuis des **Figures 5a****,** **5b****,** **5d** et **5e****.**

Dans cette variante, le rabat 621 de guidage au niveau de l'articulation entre les panneaux 610,620 formant faces de l'étui n'est pas prévu, permettant de simplifier les étapes de conception du flan 600 et les étapes de pliage et collage pour former l'étui 50. La pliure le long du bord 699 réalise alors la fonction de guidage de la carte 10 (en plus des rabats 622 et 623 restant).

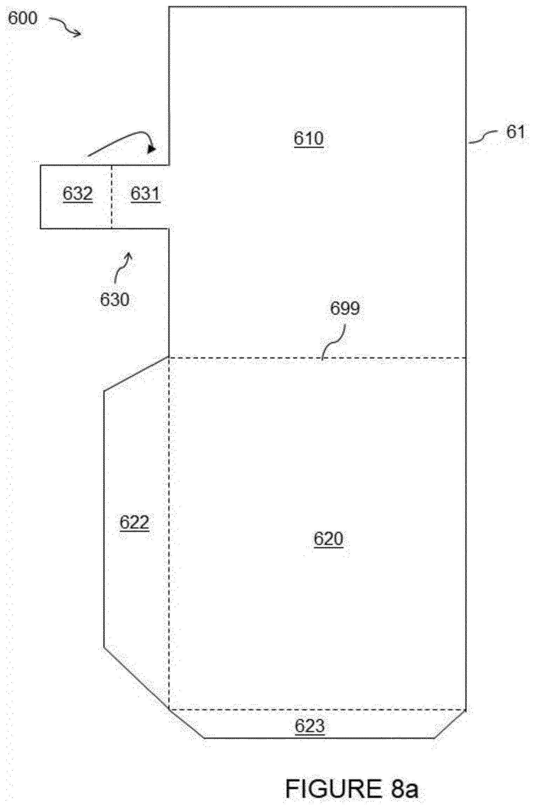

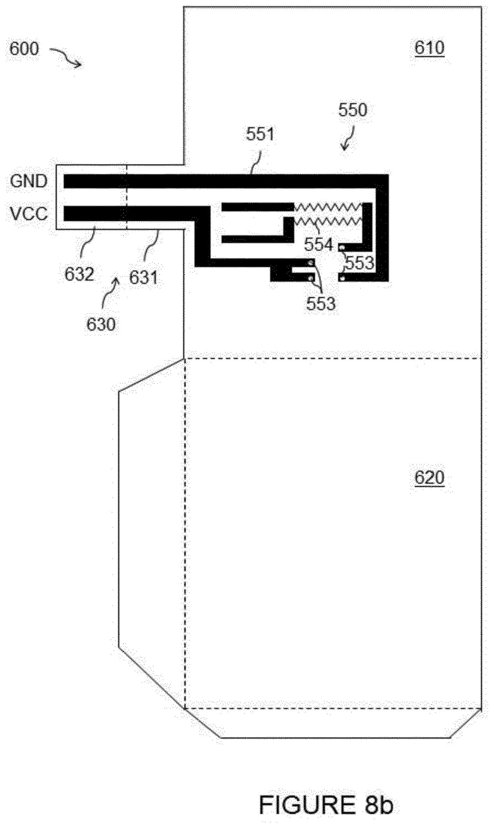

Les **Figures 8a** à **8d** illustrent un procédé de fabrication de cet étui 50. Les explications fournies ci-dessus en lien avec les **Figures 6a** à **6d** s'appliquent, à l'exception de ce qui concerne le rabat 621.

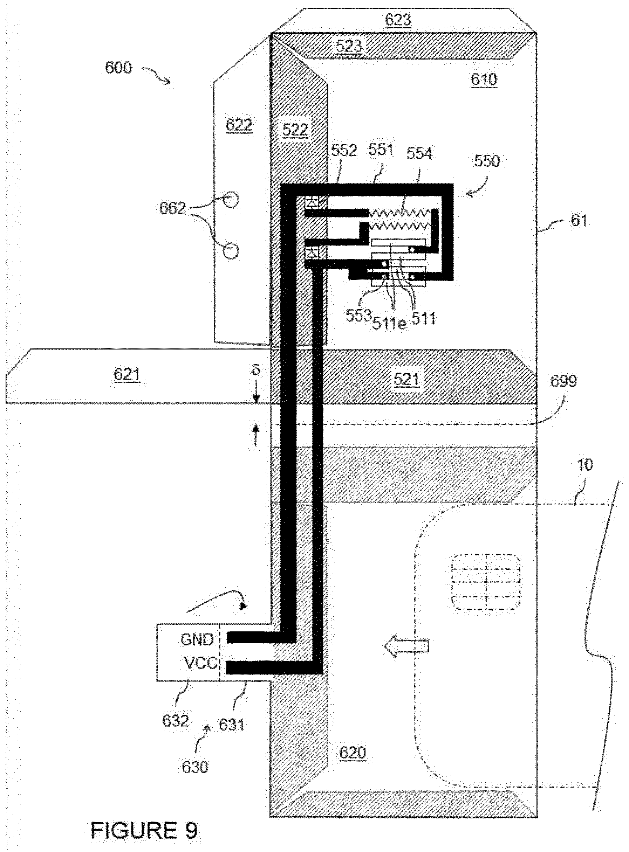

La **Figure 9** illustre une variante de la **Figure 6d** lors du processus de fabrication d'un étui 50 conforme à la **Figure 5a****,** **5b****,** **5c****,** **5d** ou **5c** (en adaptant le nombre d'ouvertures 511, 511e, 511d, 511g, 511ed, 511eg et leur agencement). Les différentes étapes correspondant aux **Figures 6a** à **6c** ne sont pas représentées pour simplifier la présentation. Elles se déduisent cependant à la lumière de la **Figure 9****.**

Dans ce mode de réalisation, la languette 630 formant interface d'alimentation électrique 530 s'étend depuis le second panneau 620, de façon similaire à ce qui a été décrit en lien avec la **Figure 6a****.**

De ce fait, le circuit 550 qui est principalement imprimé la face intérieure du premier panneau 610 se prolonge par deux portions de piste conductrice VCC et GND jusqu'à la première portion 631 de la languette 630. Cet agencement ne nécessite pas le prolongement de ces deux portions de piste jusqu'à la portion extrémale 632 de la languette car le contact électrique avec une prise USB femelle se fera par la zone supérieure (ici visible) de la première portion 631 de languette. Il résulte l'absence de point de fragilité de ces portions de piste à la pliure entre les deux portions 631 et 632 de la languette. En outre, il n'est pas nécessaire de prévoir une couche isolante sur l'une ou l'autre des portions pour éviter des court-circuit.

La portion extrémale 632 de la languette a vocation à être repliée et être collée au dos de la première portion 631 aux fins de conférer rigidité et épaisseur suffisante à l'interface d'alimentation électrique 530. Bien entendu, d'autres portions peuvent être prévues qui sont pliées et collées, afin d'obtenir un nombre de couches suffisant pour atteindre l'épaisseur souhaitée.

Le prolongement des portions de piste conductrice entre les deux panneaux est réalisé sur la même face des deux panneaux 610 et 620, simplifiant le procédé de fabrication.

Ces portions de piste passant par la pliure 699 entre les deux panneaux, une encre étirable, notamment à base d'argent, est de préférence utilisée pour leur confection. Cela améliore la fiabilité des portions de piste conductrice. En particulier, ces portions de piste conductrice sont imprimées en zigzag aux abords (seulement) de la pliure, ce qui améliore la tenue élastique de l'encre.

Les portions de piste conductrice déposées sur le deuxième panneau 620 sont de préférence réalisées dans la partie du panneau réservées au pliage et au collage des rabats 621 et 622 (c'est-à-dire les zones hachurées 521 et 522 sur la Figure). Dans ce cas, ces portions de piste ne sont pas susceptibles d'être altérées par frottement contre la carte 10 lorsque cette dernière est introduite dans l'étui 50 formé à partir du flan 600.

Par ailleurs, les trois rabats 621, 622, 623 sont toujours prévus pour fermer l'étui 50 et guider la carte 10 qui y est introduite par la fente 51.

Le rabat 622 de fond d'étui 50 est relié, articulé, au premier panneau 610, du fait de la présence de la languette 630 sur le deuxième panneau 620.

Le rabat 621 peut être indifféremment relié, articulé, au premier panneau 610 (comme illustré) ou au deuxième panneau 620 (comme sur les **Figures 6**), au voisinage de l'articulation 699.

De préférence, le rabat 621 parallèle à l'articulation 699 est disposé à une distance δ de l'articulation 699. Cela permet de protéger les portions de piste conductrice imprimées au niveau de la zone d'articulation 699 d'une éventuelle coupure de conductivité due au pliage. En effet, grâce à cet espacement δ, les deux zones de la même portion de piste de part et d'autre de l'articulation 699 se retrouvent en contact lorsque les deux panneaux 610 et 620 sont pliés et collés. Optionnellement, des plots de contact peuvent être prévus sur ces portions de piste au voisinage de l'articulation 699 (d'un côté ou des deux côtés de l'articulation) afin de fiabiliser le contact de la même portion de piste de part et d'autre de l'articulation 699.

Le rabat 623 peut être indifféremment relié, articulé, au premier panneau 610 (comme illustré) ou au deuxième panneau 620 (comme sur les **Figures 6**).

Les rabats 621 et 623 comprennent notamment des extrémités en biseau vers l'intérieur du côté du bord 61 formant fente 51, afin de faciliter l'insertion de la carte 10 dans l'étui 50.

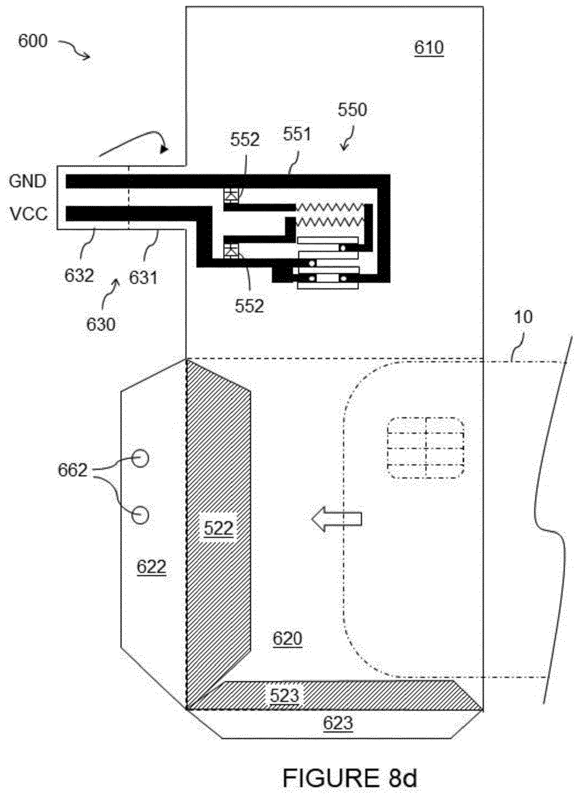

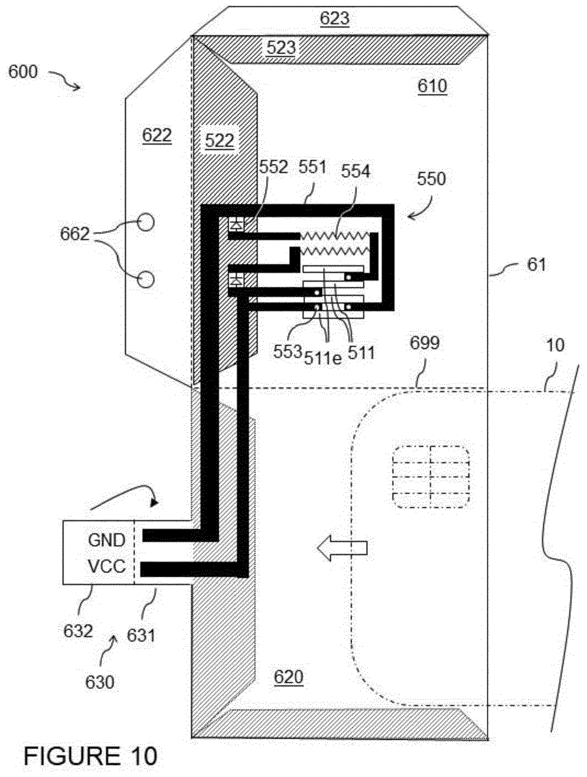

La **Figure 10** illustre un autre mode de réalisation qui est à la fois :
- une variante de la **Figure 8d** pour obtenir l'étui 50 de la **Figure 7****.** La languette 630 est prévue reliée au deuxième panneau 620 nécessitant le prolongement des portions de piste VCC et GND sur la face intérieure de ce deuxième panneau ; et
- une variante de la **Figure 9** dans le cas où le rabat 621 est omis.

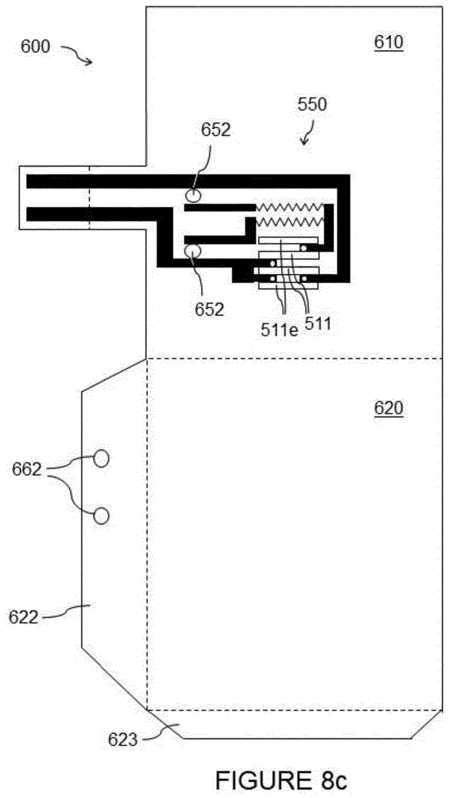

A nouveau, les différentes étapes correspondant aux **Figures 6a****/****8a** à **6c/8c** ne sont pas représentées pour simplifier la présentation. Elles se déduisent cependant à la lumière de la **Figure 10****.**

La pliure 699 fait office de guide de la carte 10 lors de son introduction par la fente 51, en lieu et place du rabat 621.

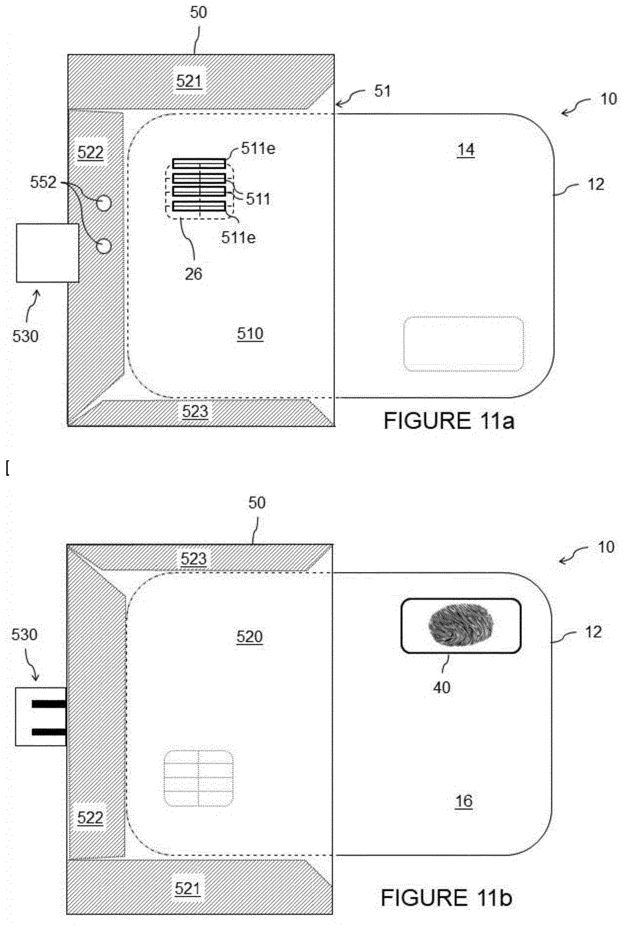

Les **Figures 11a** et **11b** illustrent un autre mode de réalisation d'un étui 50 à utiliser avec une carte selon la **Figure 2****,** c'est-à-dire pourvue d'un capteur biométrique 40 sur la face inférieure 16 (opposée à celle 14 portant les contacts 26).

Les extrémités des portions de piste VCC et GND sont prévues du même côté de l'étui 50 que celui où sera accessible le capteur biométrique 40 de la carte 10 une fois celle-ci insérée (**Figure 11b**)**.**

Sur l'exemple illustré, les diodes 552 sont visibles sur l'autre côté de l'étui 50 **(****Figure 11a****).** Dans une variante, les diodes 552 sont visibles du même côté que le capteur biométrique 40, celui représenté **Figure 11b****.**

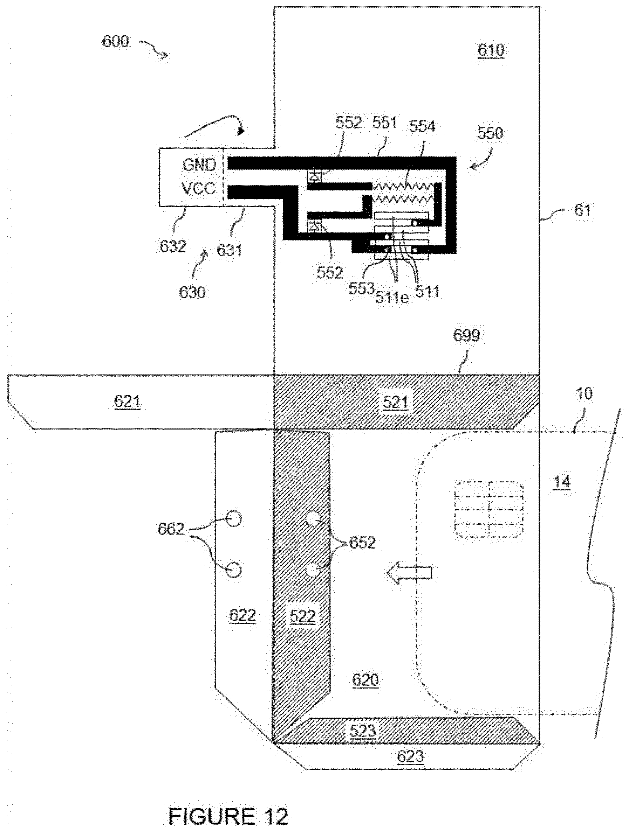

La **Figure 12** illustre un exemple de flan 600 correspondant à l'étui des **Figures 11a** et **11b****.** Cette Figure représente le flan lors de la dernière étape de constitution de l'étui 50. A nouveau, les différentes étapes préalables correspondant aux **Figures 6a****/****8a** à **6c/8c** ne sont pas représentées pour simplifier la présentation. Elles se déduisent cependant à la lumière de la **Figure 12****.**

Avantageusement, le circuit électrique 550 est déposé sur une seule face d'un seul panneau, ici le premier panneau 610. Comme visible sur la Figure, le circuit électrique est compact. Les portions de piste conductrice 551 ne traversent aucune zone de pliage, réduisant les risques de dysfonctionnement.

Dans une variante permettant d'avoir les diodes 552 sur la face de l'étui 50 orientée vers l'utilisateur lorsque ce dernier voit le capteur biométrique 40, les perforations 652 peuvent être réalisées dans le deuxième panneau 620 (et non dans le premier panneau) et les diodes 552 peuvent être retournées pour s'engager dans ces perforations du deuxième panneau 620 lorsque l'étui 50 est fermé. Ces perforations sont illustrées par des cercles blancs en pointillés.

Les rabats 621 et 623 peuvent être indifféremment reliés, articulés, au premier panneau 610 ou au deuxième panneau 620 (comme illustré). Les rabats 621 et 623 comprennent notamment des extrémités en biseau du côté du bord 61 formant fente 51 (comme décrit précédemment), afin de faciliter l'insertion de la carte 10 dans l'étui 50.

Le rabat 621 est optionnel. En son absence, la pliure 699 fait office de guide pour la carte 10 lors de son insertion dans l'étui 50.

Les **Figures 10** et **12** sont applicables pour la fabrication d'étui comprenant un agencement d'ouvertures autre que celui illustré (quatre ouvertures comme sur la **Figure 5c**), notamment les agencements des **Figures 5a** (pas d'ouverture), **5b, 5d** et **5e.**

Les exemples qui précèdent ne sont que des modes de réalisation de l'invention qui ne s'y limite pas.

Notamment, les exemples ci-dessus s'appuient sur l'utilisation d'un unique flan 600 en carton (ou équivalent) pour former, par pliage et collage, l'étui 50. En variante, l'étui 50 peut être constitué par le collage de plusieurs pièces en carton (ou équivalent) indépendantes, avec éventuels pliages.

Si certains agencements d'ouvertures 511 sont décrits et illustrés, l'invention s'appliquent à d'autres agencements, incluant des ouvertures de mêmes dimensions ou de dimensions différentes.

## Revendications

1. Etui (50) pour carte à puce (10) formé d'une pochette aux dimensions permettant d'y insérer une carte à puce par une fente (51), **caractérisé en ce que**
la pochette est en matériau de fibres cellulosiques, et
la pochette comprend un circuit électrique (550) déposé à même le matériau de fibres cellulosiques qui relie électriquement des contacts électriques (26) de la carte à une interface d'alimentation électrique (530) lorsque la carte est insérée dans une première position.

2. Etui (50) selon la revendication 1, dans lequel le circuit électrique (550) est déposé sur une face intérieure de la pochette, l'interface d'alimentation électrique pouvant présenter une partie externe à la pochette.

3. Etui (50) selon la revendication 1 ou 2, dans lequel le circuit électrique (550) comporte plusieurs plots de contact (553) agencés en une ou plusieurs positions de contact d'un motif matriciel pour réaliser un contact électrique avec la carte (10) insérée, la pochette comportant au moins une ouverture traversante (511) disposée entre deux positions de contact du motif matriciel.

4. Etui (50) selon la revendication 3, dans lequel la pochette comporte une pluralité d'ouvertures (511) disposées chacune entre deux rangées successives du motif matriciel portant des plots de contact (553).

5. Etui (50) selon la revendication 3 ou 4, dans lequel la pochette comporte en outre une ou plusieurs ouvertures extrémales (511e) disposées extérieurement à l'ensemble du motif matriciel portant des plots de contact (553).

6. Etui (50) selon l'une des revendications 3 à 5, dans lequel le motif matriciel est formé de deux colonnes de quatre lignes conformément au standard ISO/IEC 7816-2 : 2007.

7. Etui (50) selon l'une des revendications précédentes, dans lequel le circuit électrique (550) est constitué d'une ou plusieurs portions de piste conductrice (551) déposées sur la pochette, d'une ou plusieurs composants (552) formant interface utilisateur et optionnellement d'une source d'énergie.

8. Etui (50) selon l'une des revendications précédentes, dans lequel la pochette en matériau de fibres cellulosiques est formée d'une seule pièce.

9. Etui (50) selon l'une des revendications précédentes, dans lequel la pochette comporte des moyens de guidage (521, 522, 523) de la carte (10) vers la première position, les moyens de guidage étant formés par des rabats (621, 622, 623) fixant ensemble un panneau avant (610) et un panneau arrière (620) de la pochette.

10. Etui (50) selon la revendication 9, dans lequel les rabats présentent un bord en biseau du côté de la fente (51) d'insertion.

11. Système comprenant un étui (50) selon l'une des revendications précédentes et une carte à puce (10) dotée d'un capteur biométrique (40) pourvu en surface de la carte, le capteur biométrique étant accessible depuis l'extérieur de l'étui lorsque la carte à puce est insérée dans la première position.

12. Flan (600) pour étui (50) à carte (10), **caractérisé en ce qu'**il est en matériau de fibres cellulosiques et comprend deux panneaux (610, 620) adjacents et articulés destinés à former les deux faces (510, 520) d'un étui (50) en forme de pochette aux dimensions permettant d'y insérer une carte à puce (50) par une fente (51), un circuit électrique (550) étant déposé à même le matériau de fibres cellulosiques d'au moins un premier (610) desdits panneaux, le circuit électrique comportant, sur le premier panneau, des plots de contact (553) agencés de sorte à relier électriquement des contacts électriques (26) de la carte (10) à une interface d'alimentation électrique (530) lorsque la carte est insérée dans une première position dans l'étui en forme de pochette.

13. Flan (600) selon la revendication 12, dans lequel les plots de contact (553) sont agencés en une ou plusieurs positions de contact d'un motif matriciel pour réaliser un contact électrique avec la carte insérée dans la première position, et le premier panneau (610) comporte au moins une ouverture (511) disposée entre deux positions de contact du motif matriciel.

14. Flan (600) selon la revendication 12 ou 13, dans lequel le premier panneau (610) comporte une pluralité d'ouvertures (511) disposées chacune entre deux rangées successives du motif matriciel portant des plots de contact (553), et une ou plusieurs ouvertures extrémales (511e) disposées extérieurement à l'ensemble du motif matriciel portant des plots de contact.

15. Procédé de fabrication d'un étui (50) pour carte à puce (10), **caractérisé en ce qu'**il comprend les étapes suivantes :
formation d'un flan (600) en matériau de fibres cellulosiques, comprenant deux panneaux (610, 620) adjacents et articulés destinés à former les deux faces (510, 520) d'un étui (50) en forme de pochette aux dimensions permettant d'y insérer une carte à puce (10) par une fente (51), un circuit électrique (550) étant déposé à même le matériau de fibres cellulosiques d'au moins un premier (610) desdits panneaux, le circuit électrique (550) comportant, sur le premier panneau, des plots de contact (553) reliés à une interface d'alimentation électrique (530),
obtention de l'étui (50) en forme de pochette par pliage et collage du flan (600) de sorte que les plots de contact (553) relient électriquement des contacts électriques (26) d'une carte (10) à l'interface d'alimentation électrique (530) lorsque la carte est insérée dans une première position dans l'étui (50) en forme de pochette.

## Patentansprüche

1. Etui (50) für eine Chipkarte (10), das aus einer Tasche mit Abmessungen gebildet ist, die es ermöglichen, eine Chipkarte durch einen Schlitz (51) in diese einzuführen, **dadurch gekennzeichnet, dass**
die Tasche aus einem Cellulosefasermaterial ist und
die Tasche eine elektrische Schaltung (550) beinhaltet, die unmittelbar auf das Cellulosefasermaterial aufgebracht ist und elektrische Kontakte (26) der Karte mit einer Stromversorgungsschnittstelle (530) elektrisch verbindet, wenn die Karte in eine erste Position eingeführt ist.

2. Etui (50) nach Anspruch 1, wobei die elektrische Schaltung (550) auf eine Innenseite der Tasche aufgebracht ist, wobei die Stromversorgungsschnittstelle einen Teil außerhalb der Tasche aufweisen kann.

3. Etui (50) nach Anspruch 1 oder 2, wobei die elektrische Schaltung (550) mehrere Kontaktpunkte (553) umfasst, die an einer oder mehreren Kontaktpositionen eines Matrixmusters angeordnet sind, um einen elektrischen Kontakt mit der eingeführten Karte (10) herzustellen, wobei die Tasche mindestens eine durchgehende Öffnung (511) umfasst, die zwischen zwei Kontaktpositionen des Matrixmusters angeordnet ist.

4. Etui (50) nach Anspruch 3, wobei die Tasche eine Vielzahl von Öffnungen (511) umfasst, die jeweils zwischen zwei aufeinanderfolgenden Reihen des Matrixmusters, das Kontaktpunkte (553) trägt, angeordnet sind.

5. Etui (50) nach Anspruch 3 oder 4, wobei die Tasche ferner eine oder mehrere außenliegende Öffnungen (511e) umfasst, die außen an der Einheit des Matrixmusters, das Kontaktpunkte (553) trägt, angeordnet sind.

6. Etui (50) nach einem der Ansprüche 3 bis 5, wobei das Matrixmuster gemäß der Norm ISO/IEC 7816-2 : 2007 aus zwei Spalten zu je vier Zeilen gebildet ist.

7. Etui (50) nach einem der vorhergehenden Ansprüche, wobei die elektrische Schaltung (550) aus einem oder mehreren Leiterbahnabschnitten (551), die auf die Tasche aufgebracht sind, einer oder mehreren Komponenten (552), die eine Benutzerschnittstelle bilden, und optional einer Energiequelle besteht.

8. Etui (50) nach einem der vorhergehenden Ansprüche, wobei die Tasche aus Cellulosefasermaterial einstückig ausgebildet ist.

9. Etui (50) nach einem der vorhergehenden Ansprüche, wobei die Tasche Mittel (521, 522, 523) zum Führen der Karte (10) in die erste Position umfasst, wobei die Führungsmittel durch Laschen (621, 622, 623) gebildet sind, die eine Vorderwand (610) und eine Rückwand (620) der Tasche aneinander befestigen.

10. Etui (50) nach Anspruch 9, wobei die Laschen auf der Seite des Einführschlitzes (51) einen abgeschrägten Rand aufweisen.

11. System, das ein Etui (50) nach einem der vorhergehenden Ansprüche und eine Chipkarte (10), die über einen biometrischen Sensor (40), der auf der Oberfläche der Karte bereitgestellt ist, verfügt, beinhaltet, wobei der biometrische Sensor außerhalb des Etuis zugänglich ist, wenn die Chipkarte in die erste Position eingeführt ist.

12. Zuschnitt (600) für ein Etui (50) einer Karte (10), **dadurch gekennzeichnet, dass** er aus Cellulosefasermaterial ist und zwei angrenzende und gelenkig verbundene Wände (610, 620) beinhaltet, die dazu bestimmt sind, die zwei Seiten (510, 520) eines Etuis (50) in Form einer Tasche mit Abmessungen zu bilden, die es ermöglichen, eine Chipkarte (50) durch einen Schlitz (51) in diese einzuführen, wobei eine elektrische Schaltung (550) unmittelbar auf das Cellulosefasermaterial mindestens einer ersten (610) der Wände aufgebracht ist, wobei die elektrische Schaltung an der ersten Wand Kontaktpunkte (553) umfasst, die so angeordnet sind, dass sie elektrische Kontakte (26) der Karte (10) mit einer Stromversorgungsschnittstelle (530) elektrisch verbinden, wenn die Karte in eine erste Position in das Etui in Form einer Tasche eingeführt ist.

13. Zuschnitt (600) nach Anspruch 12, wobei die Kontaktpunkte (553) an einer oder mehreren Kontaktpositionen eines Matrixmusters angeordnet sind, um einen elektrischen Kontakt mit der in die erste Position eingeführten Karte herzustellen, und die erste Wand (610) mindestens eine Öffnung (511) umfasst, die zwischen zwei Kontaktpositionen des Matrixmusters angeordnet ist.

14. Zuschnitt (600) nach Anspruch 12 oder 13, wobei die erste Wand (610) eine Vielzahl von Öffnungen (511), die jeweils zwischen zwei aufeinanderfolgenden Reihen des Matrixmusters, das Kontaktpunkte (553) trägt, angeordnet sind, und eine oder mehrere außenliegende Öffnungen (511e), die außen an der Einheit des Matrixmusters, das Kontaktpunkte trägt, angeordnet sind, umfasst.

15. Verfahren zur Herstellung eines Etuis (50) für eine Chipkarte (10), **dadurch gekennzeichnet, dass** es die folgenden Schritte beinhaltet:
Bilden eines Zuschnitts (600)aus Cellulosefasermaterial, der zwei angrenzende und gelenkig verbundene Wände (610, 620) beinhaltet, die dazu bestimmt sind, die zwei Seiten (510, 520) eines Etuis (50) in Form einer Tasche mit Abmessungen zu bilden, die es ermöglichen, eine Chipkarte (10) durch einen Schlitz (51) in diese einzuführen, wobei eine elektrische Schaltung (550) unmittelbar auf das Cellulosefasermaterial mindestens einer ersten (610) der Wände aufgebracht ist, wobei die elektrische Schaltung (550) an der ersten Wand Kontaktpunkte (553) umfasst, die mit einer Stromversorgungsschnittstelle (530) verbunden sind,
Erhalten des Etuis (50) in Form einer Tasche durch das Falten und Verkleben des Zuschnitts (600), sodass die Kontaktpunkte (553) elektrische Kontakte (26) einer Karte (10) mit der Stromversorgungsschnittstelle (530) elektrisch verbinden, wenn die Karte in eine erste Position in das Etui (50) in Form einer Tasche eingeführt ist.

## Claims

1. Case (50) for a chip card (10) formed by a pouch of dimensions which make it possible to insert a chip card therein through a slit (51), **characterized in that**
the pouch is made from cellulose fibre material, and
the pouch comprises an electrical circuit (550) directly deposited on the cellulose fibre material which electrically connects electrical contacts (26) of the card to an electric power supply interface (530) when the card is inserted in a first position.

2. Case (50) according to Claim 1, in which the electrical circuit (550) is deposited on an inner face of the pouch, the electric power supply interface possibly having a portion which is external to the pouch.

3. Case (50) according to Claim 1 or 2, in which the electrical circuit (550) comprises several contact pads (553) arranged in one or more contact positions of a matrix pattern in order to make electrical contact with the inserted card (10), the pouch comprising at least one through opening (511) arranged between two contact positions of the matrix pattern.

4. Case (50) according to Claim 3, in which the pouch comprises a plurality of openings (511) each arranged between two successive rows of the matrix pattern bearing contact pads (553).

5. Case (50) according to Claim 3 or 4, in which the pouch further comprises one or more end openings (511e) arranged outside the whole matrix pattern bearing contact pads (553).

6. Case (50) according to one of Claims 3 to 5, in which the matrix pattern is formed from two columns of four rows in accordance with the ISO/IEC 7816-2:2007 standard.

7. Case (50) according to one of the preceding claims, in which the electrical circuit (550) is composed of one or more conductive track portions (551) deposited on the pouch, of one or more components (552) forming a user interface and optionally of a power source.

8. Case (50) according to one of the preceding claims, in which the pouch made from cellulose fibre material is formed from a single part.

9. Case (50) according to one of the preceding claims, in which the pouch comprises guiding means (521, 522, 523) for guiding the card (10) towards the first position, the guiding means being formed by flaps (621, 622, 623) fastening a front panel (610) and a rear panel (620) of the pouch together.

10. Case (50) according to Claim 9, in which the flaps have an edge bevelled with the side of the insertion slit (51) .

11. System comprising a case (50) according to one of the preceding claims and a chip card (10) equipped with a biometric sensor (40) provided on the surface of the card, the biometric sensor being accessible from outside the case when the chip card is inserted in the first position.

12. Blank (600) for a case (50) for a card (10), **characterized in that** it is made from cellulose fibre material and comprises two adjacent and hinged panels (610, 620) intended to form the two faces (510, 520) of a case (50) in the form of a pouch of dimensions which make it possible to insert a chip card (50) therein through a slit (51), an electrical circuit (550) being directly deposited on the cellulose fibre material of at least a first (610) of said panels, the electrical circuit comprising, on the first panel, contact pads (553) arranged so as to electrically connect electrical contacts (26) of the card (10) to an electric power supply interface (530) when the card is inserted in a first position in the case in the form of a pouch.

13. Blank (600) according to Claim 12, in which the contact pads (553) are arranged in one or more contact positions of a matrix pattern in order to make electrical contact with the card inserted in the first position, and the first panel (610) comprises at least one opening (511) arranged between two contact positions of the matrix pattern.

14. Blank (600) according to Claim 12 or 13, in which the first panel (610) comprises a plurality of openings (511) each arranged between two successive rows of the matrix pattern bearing contact pads (553), and one or more end openings (511e) arranged outside the whole matrix pattern bearing contact pads.

15. Method for manufacturing a case (50) for a chip card (10), **characterized in that** it comprises the following steps:
forming a blank (600) from cellulose fibre material, comprising two adjacent and hinged panels (610, 620) intended to form the two faces (510, 520) of a case (50) in the form of a pouch of dimensions which make it possible to insert a chip card (10) therein through a slit (51), an electrical circuit (550) being directly deposited on the cellulose fibre material of at least a first (610) of said panels, the electrical circuit (550) comprising, on the first panel, contact pads (553) connected to an electric power supply interface (530), obtaining the case (50) in the form of a pouch by folding and bonding the blank (600) so that the contact pads (553) electrically connect electrical contacts (26) of a card (10) to the electric power supply interface (530) when the card is inserted in a first position in the case (50) in the form of a pouch.
